# EUROPÄISCHE PATENTSCHRIFT

(11) **EP 3 124 886 B1**
(45) Veröffentlichungstag und Bekanntmachung des Hinweises auf die Patenterteilung: **18.04.2018**
(21) Anmeldenummer: 15002249.9
(22) Anmeldetag: 29.07.2015
(51) Int. Cl.: F24F 11/74

(54) **VOLUMENSTROMREGLER**
VOLUME FLOW REGULATOR
RÉGULATEUR DE DÉBIT

(43) Veröffentlichungstag der Anmeldung: 01.02.2017
(73) Patentinhaber: Vysoké ucení Technické v Brne, 601 90 Brno (CZ)
(72) Erfinder: Malásek, Jirí, 63500 Brno (CZ)
(74) Vertreter: Markes, Libor

(56) Entgegenhaltungen:
- US-A- 4 697 736
- US-A- 5 183 435
- US-B1- 6 402 609

## Beschreibung

Die Erfindung betrifft eine Vorrichtung mit einem Volumenstromregler für fluide Medien, insbesondere für die Luft und andere Gase, die durch einen Kanal mit Kreisquerschnitt strömen. Die Einrichtung kann beispielsweise bei der Leistungsregelung von Dachentlüftung an Wohn-, Produktions-, Wirtschafts- und Lagergebäuden Verwendung finden, wo sie mit einem windgetriebenen Dachventilator kooperiert.
Die Auftriebslüftung von Gebäuden wird durch windgetriebene Ventilatoren verstärkt, die am Ende der Abzugsrohren, in der Regel auf dem Dach, angebracht sind. Bekannt sind z.B. Dachventilatoren Hurricane, Lomaco oder Edmonds. Der Luftdurchfluss wird bei der gegenwärtigen Dachentlüftung meistens nicht geregelt. In einzelnen Fällen werden gängige lufttechnische, hand- oder motorgetriebene Klappen benutzt, oder die Umdrehungen des Ventilators werden durch einen elektronischen Regler in gewünschten Grenzen gehalten.
Aus der US 6402609 ist ein Dämpfer einer auf dem Dach eines Gebäudes angebrachten Windturbine bekannt, der durch eine Klappe gebildet ist, die in einem unter der Windturbine positionierten Rohr gelagert ist und durch einen Bowdenzug ferngesteuert wird.
In der US 5183435 ist ein windgetriebener Dachventilator beschrieben, in dessen Zuführrohr mit Kreisquerschnitt eine radförmige Klappe an einer waagerechten Welle befestigt ist, die an beiden Enden in den Rohrwänden gelagert ist. Die Klappe wird durch eine außerhalb des Rohrs befindliche Kurbel bedient. Die US 5183435 offenbart damit den Oberbegriff von Anspruch 1. Die beiden angeführten Lösungen haben zum Nachteil, dass sie keine Selbstregelungsfähigkeit aufweisen.
Die US 4697736 bezieht sich auf einen automatischen Durchflussdämpfer, der in einem Abzugsrohr eines Lüftungssystems angebracht ist, das am Austritt mit einer windgetriebenen Turbine versehen ist. Der Dämpfer besteht aus zwei Schaufeln, die drehbar an einer zu der Rohrachse senkrechten Achse gelagert sind und in einer der Grenzstellungen fast den ganzen Querschnitt des Abflussrohrs blockieren. Die Schaufeln werden in eine geöffnete Stellung mittels eines Nockenmechanismus aufgeklappt, der durch ein thermostatisches Element getrieben wird. Der Dämpfer hat zur Aufgabe, den Durchfluss im Abzugsrohr zu drosseln, wenn die Temperatur der strömenden Luft eine gewisse Grenze erreicht.
Bei Windstille dreht sich der windgetriebene Dachventilator nicht, und der Durchfluss der abgesaugten Luft nähert sich Null. Das ist aber unerwünscht, besonders bei hohen Temperaturen während der Sommermonate. Der Dachventilator kann dann durch einen Elektromotor zum Drehen gebracht werden, oder gegebenenfalls mit einem angetriebenen Lüfter ergänzt werden.
Bei starkem Wind hat der Dachventilator dagegen eine hohe Drehzahl, so dass das Volumen der abgesaugten Luft tausende Kubikmeter pro Stunde erreichen kann. So eine Leistung ist während der Wintermonate unerwünscht, weil die in der abgeführten Luft enthaltene Wärme für das belüftete Bauwerk große Wärmeverluste bedeutet. Hier ist deswegen eine Durchflussregelung sehr wichtig.
Der Erfindung liegt die Aufgabe zu Grunde, eine einfache Vorrichtung zur Volumenstromregelung an die Hand zu geben, die den Durchfluss eines fluiden Mediums bei Überdrehzahl des Antriebsmotors selbsttätig begrenzt.

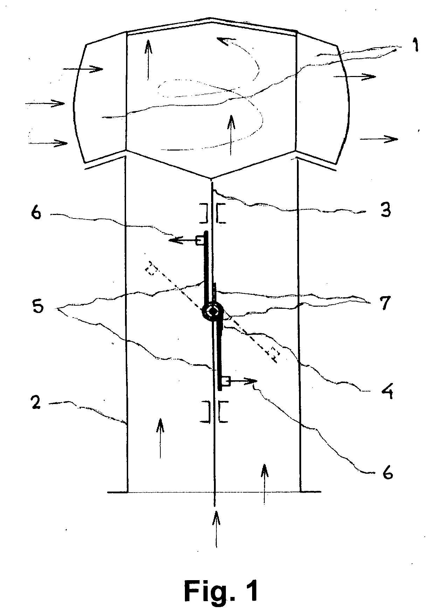

Erfindungsgemäß wird diese Aufgabe durch Vorrichtung mit den Merkmalen von Anspruch 1 gelöst. Bevorzugte Ausführungsformen sind in den abhängigen Ansprüchen definiert. Das Regelungselement kann als eine an einem senkrecht zu der Antriebswelle positionierten Zapfen drehbar gelagerte rundförmige Klappe gebildet sein, die mit einer Rückfeder versehen ist.
Das Regelungselement kann auch als eine Zusammensetzung mit Rückfedern belasteter Segmente gebildet sein, die an Zapfen drehbar gelagert sind, die an dem Umkreis eines von der Antriebswelle mitgenommenen Tragwerks parallel zu der Antriebswelle befestigt sind.
Der Volumenstromregler kann mit einem thermischen Regler zur Bestimmung einer Ausgangsstellung oder Vorspannung der gegen die Fliehkraft der Gewichte wirkender Rückfeder versehen sein. Weitere Einzelheiten der Erfindung werden anhand der in der Zeichnung dargestellten Ausführungsbeispiele näher erläutert.
Es zeigen:
Fig. 1 schematische Darstellung einer Ausführung einer erfindungsgemäßen Vorrichtung mit Volumenstromregler in Form einer Regelungsklappe, die von einer Antriebswelle eines windgetriebenen Dachventilators getrieben ist,
Fig. 2 bis 4 eine Ausführung eines Volumenstromreglers in Form eines sich drehenden Drosselventils mit drehbaren Segmenten, u. z.

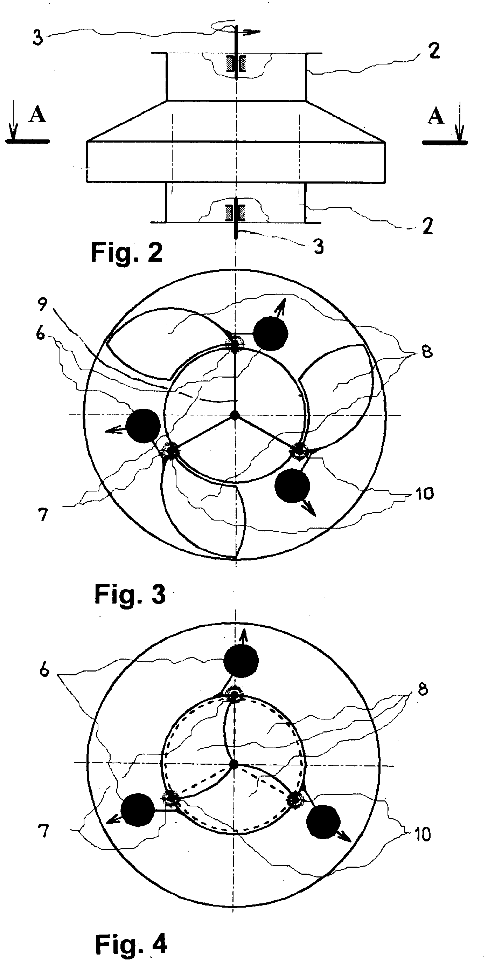

Fig. 2 eine Seitenansicht der Verkleidung des Volumenreglers,
Fig. 3 der Volumenregler nach Fig. 2 im Schnitt A-A mit geöffneten Segmenten bei niedrigen Umdrehungen und
Fig. 4 mit geschlossenen Segmenten bei hohen Umdrehungen.
In der Ausführung nach Fig. 1 treibt ein windgetriebener Ventilator **1** am Ende eines Abzugsrohrs **2** eine senkrechte zentrale Welle **3,** die in einem Abzugsrohr **2** mit Kreisquerschnitt zentral gelagert ist. Ein waagerechter Zapfen **4** ist an der Antriebswelle **3** befestigt und wird mittels der Antriebswelle 3 vom Ventilator **1** getrieben. Eine kreisförmige Klappe **5** ist an dem Zapfen **4** drehbar gelagert und an den gegengesetzten Seiten mit Gewichten **6** versehen. Die Klappe **5** ist durch eine Rückfeder **7** in die geöffnete Lage gedrängt.

Die Klappe **5,** die eine Regelungs- und Einsperrfunktion hat, dreht sich zusammen mit dem Ventilator **1** um die Drehachse des Ventilators **1.** Die gegen die Federkraft wirkende Fliehkraft der Gewichte **6** bewirkt Lageänderung der Klappe **5.** Dadurch kommt es zum Schließen, Öffnen und zur Regelung des Volumenstroms durch das Rohr **2.** Das funktioniert auch, wenn die Luft in dem Rohr **2** wirbelt und deren Umdrehungen sich von den Umdrehungen des Ventilators **1** nicht wesentlich unterscheiden. Die Klappe **5** kann darüber hinaus mittels eines thermischen Reglers auf Temperaturänderungen reagieren, der deren Ausgangsstellung oder Vorspannung der gegen die Fliehkraft der Gewichte **6** wirkenden Rückfeder **7** umstellen kann.

In der Ausführung der Vorrichtung nach Fig. 2 bis 4 ist das Regelungselement durch Segmente **8** gebildet, die an Zapfen **10** drehbar gelagert sind. Die zu der Antriebswelle **3** parallelen Zapfen **10** sind am Umfang eines Tragwerks **9** befestigt, das durch drei Speichen mit der Antriebswelle **3** verbunden ist. Die Segmente **8** sind mit Rückfedern **7** versehen, die sie in einer offenen Lage halten. Gegen den Effekt der Rückfeder **7** wirkt die Fliehkraft der sich drehenden Gewichte **6,** die an den Segmenten **8** mit einem Abstand von Achsen der Zapfen **10** befestigt sind. Wenn die Drehungen einen gewissen Wert erreichen, übersteigt die Fliehkraft der Gewichte **6** die Vorspannung der Feder **7,** und die Segmente **8** beginnen, sich in die geschlossene Lage zu drehen.
Die Geschwindigkeit des Windes, der die Dachventilatoren antreibt, ist ungefähr proportional zu dem Volumen der abgesaugten Luft in dem Anschlussstutzen des windgetriebenen Dachventilators. Im Winter, bei Temperaturen um - 20°C und bei starkem Wind strömen ganz enorme Mengen der Wärmeenergie aus den Steigleitungen der perfekt wärmeisolierten mehrstöckigen Wohngebäude. Diese Wärme muss in die Gebäude wieder zurückgeliefert werden. Eine massenhafte Einführung der erfindungsgemäßen Regelungseinrichtung könnte enorme Wärmeersparnisse mit sich bringen und einen Beitrag zum Schutz der Umwelt leisten.

## Patentansprüche

1. Vorrichtung umfassend einem Volumenstromregler für fluide Medien in einem Abzugsrohr (2) mit Kreisquerschnitt, welches in einem windgetriebenen Ventilator (1) mündet, wobei in dem Abzugsrohr (2) mindestens ein flaches, bewegliches, als Stellwerk funktionierendes Element angeordnet ist, **dadurch gekennzeichnet, dass** der Volumenstromregler durch den windgetriebenen Ventilator (1) mit einer zentral im Abzugsrohr (2) gelagerten Antriebswelle (3) gebildet ist, an der zumindest ein von der Antriebswelle (3) getriebenes, federbelastetes, flaches, um einen Zapfen (4, 10) drehbar gelagertes Regelungselement (5, 8) angebracht ist, welches durch die Federbelastung in die geöffnete Lage gedrängt wird und das in einem Abstand von der Zapfenachse mit einem Gewicht (6) versehen ist und das mit zunehmender Drehzahl unter dem Einfluss der Fliehkraft eine den Abzugsrohrquerschnitt verkleinernde Lage einnimmt.

2. Vorrichtung nach Anspruch 1, **dadurch gekennzeichnet, dass** das Regelungselement (5, 8) als eine an einem senkrecht zu der Antriebswelle (3) positionierten Zapfen (4) drehbar gelagerte rundförmige Klappe (5) gebildet ist, die mit einer Rückfeder (7) versehen ist.

3. Vorrichtung nach Anspruch 1, **dadurch gekennzeichnet, dass** das Regelungselement als eine Zusammensetzung mit Rückfedern (7) belasteter Segmente (8) gebildet ist, die an Zapfen (10) drehbar gelagert sind, die an dem Umkreis eines von der Welle (3) getriebenen Tragwerks (9) parallel zu der Antriebswelle (3) befestigt sind.

4. Vorrichtung nach Anspruch 2, **dadurch gekennzeichnet, dass** er mit einem thermischen Regler zur Bestimmung einer Ausgangsstellung oder Vorspannung der gegen die Fliehkraft der Gewichte (6) wirkender Rückfeder (7) versehen ist.

## Claims

1. A device comprising a gaseous medium stream volume regulator in an exhaust channel (2) with circular cross section, opened into a ventilator (1) driven by wind, where the exhaust channel (2) is equipped with at least one flat mobile element acting as a regulating member, **characterised in that** the regulator comprises a wind driven ventilator (1) with a drive shaft (3) positioned centrally in the exhaust channel (2), and holding at least one flat spring-loaded regulating element (5, 8) mounted on a pivot (4, 10), whereas the regulating element (5, 8) is forced by the power of a spring to the open position and is provided with a weight (6) placed in a distance from the pivot (4, 10) axis, to take positions reducing the lumen of the exhaust channel under the effect of centrifugal forces.

2. A device according to claim 1, **characterised in that** the regulating element is made as a circular shutter (5) mounted on a pivot (4) placed perpendicularly to the drive shaft (3), whereas the shutter (5) is provided with a return spring (7).

3. A device according to claim 1, **characterised in that** the regulating element is made as a set of segments (8) mounted on pivots (10) and loaded by return springs (7), the said pivots are fixed in parallel to the drive shaft (3) along the circumference of a structure (9) driven by the shaft (3).

4. A device according to claim 2, **characterised in that** the said device is provided with a heat regulator for setting of the initial position or pre-stress of the return springs (7) acting against the centrifugal force of the weight (6).

## Revendications

1. Le dispositif qui renferme un régulateur du volume de flux du médium gazeux dans un conduit (2) d'aspiration en section circulaire qui débouche dans un ventilateur (1) alimenté par le vent, où dans le conduit (2) d'aspiration est rangé au moins un élément plat mobile qui fonctionne comme un organe de régulation, **caractérisé en ce que** le régulateur est constitué par le ventilateur (1) propulsé par le vent avec un arbre (3) de transmission monté centralement dans le conduit (2) d'aspiration, sur lequel est monté au moins un élément (5, 8) de régulation plat assisté par ressort monté rotatif autour d'une broche (4, 10) qui est poussé dans la position ouverte par la force d'un ressort, il est muni avec une distance de l'axe de la broche (4, 10) par un poids (6) et qui avec l'augmentation des tours par l'influence de la force centrifuge occupe une position qui décroisse la section transversale du conduit d'aspiration.

2. Le dispositif selon la revendication 1, **caractérisé en ce que** l'élément (5, 8) de régulation est constitué comme un clapet (5) circulaire monté rotatif sur un pivot (4) installé verticalement à un arbre (3) de transmission, où un clapet (5) est muni d'un ressort (7) de retour.

3. Le dispositif selon la revendication 1, **caractérisé en ce que** l'élément de régulation est constitué comme un ensemble des ressorts (7) de retour des segments (8) chargés qui sont montés rotatif sur des pivots (10) fixés en parallèle avec un arbre (3) de transmission sur la périphérie d'une structure (9) alimentée par l'arbre (3).

4. Le dispositif selon la revendication 2, **caractérisé en ce qu'il** est muni d'un régulateur thermique pour l'ajustement de la position de départ ou de la précontrainte des ressorts (7) de retour qui exercent une force contre la force centrifuge du poids (6).
